# EUROPEAN PATENT APPLICATION

(11) **EP 4 411 027 A1**
(43) Date of publication of application: **07.08.2024**
(21) Application number: 23760099.4
(22) Date of filing: 24.02.2023
(51) Int. Cl.: C25B 9/60, C25B 9/77

(54) **ELECTROLYTIC CELL AND ELECTROLYTIC DEVICE**

(30) Priority: 24.02.2022 JP 2022026586
(71) Applicant: Mitsubishi Heavy Industries, Ltd., Tokyo 100-8332 (JP)
(72) Inventor: TAGAMI, Naoto, Tokyo 100-8332 (JP); TAJIMA, Hidehiko, Tokyo 100-8332 (JP); URASHITA, Yasutaka, Tokyo 100-8332 (JP); FURUKAWA, Shoichi, Tokyo 100-8332 (JP); TSURUMAKI, Shigeru, Tokyo 100-8332 (JP); MUKAI, Daisuke, Tokyo 100-8332 (JP); SUKENOBU, Takahiro, Tokyo 100-8332 (JP)
(74) Representative: Hoffmann Eitle
(86) International application number: PCT/JP2023/006710
(87) International publication number: WO 2023/163100

(57) **Abstract**

An electrolytic cell according to the present disclosure includes: a first separator; a second separator disposed with a space between the second separator and the first separator; an ion exchange membrane disposed between the first separator and the second separator and configured to partition at least part of the space into an anode chamber and a cathode chamber; and a sealing part disposed between the first separator and the second separator, located on an outer side from an outer edge portion of the ion exchange membrane, and configured to seal the space.

## Description

### Technical Field

The present disclosure relates to an electrolytic cell and an electrolyzer.

This application claims priority based on JP 2022-26586 filed on February 24, 2022, contents of which are incorporated herein by reference.

### Background Art

Patent Document 1 discloses an electrolytic separation method of providing a hydrogen gas electrode in an anode chamber, bringing the hydrogen gas electrode into close contact with an opposite surface to an ion exchange membrane, and electrolyzing salt while supplying mixed gas containing hydrogen and water to the hydrogen gas electrode. This electrolytic separation method is intended to prevent drying of a central region of the ion exchange membrane.

Patent Document 2 discloses a water electrolytic cell including a solid polymer electrolyte membrane which is provided between a pair of separators and includes an anode and a cathode formed on both surfaces of the solid polymer electrolyte membrane and a power feeder interposed between the solid polymer electrolyte membrane and the separators. In the water electrolytic cell, an electrode forming surface is formed except for a portion where a gas sump is generated. This electrolytic cell is intended to improve a water electrolyzing efficiency by eliminating gas retention at an end portion of the power feeder.

Patent Document 3 discloses an operation shutdown method of a highpressure hydrogen production device. The method includes a step of opening an on-off valve to depressurize a cathode-side pressure via a depressurizing line and a step of performing water electrolyzing treatment at a normal pressure while maintaining the on-off valve in an open state after the depressurization on the cathode side is completed. This operation shutdown method is intended to prevent drying of a solid polymer electrolyte membrane by keeping a satisfactory amount of water on the cathode side by a step during operation shutdown.

Patent Document 4 discloses an electrolyzer in which a separator is provided with a sealing member that surrounds a hydrogen discharge communication hole and a water passage portion that surrounds the sealing member and flows water. This electrolyzer is intended to prevent drying of an outer portion of the sealing member in the vicinity of the hydrogen discharge communication hole.

### Citation List

### Patent Literature

Patent Document 1: JP 3201854 B
Patent Document 2: JP 4611345 B
Patent Document 3: JP 2013-32572 A
Patent Document 4: JP 5364056 B

### Summary of Invention

### Technical Problem

When an ion exchange membrane is provided between a pair of separators and a sealing part for sealing an interior space of an electrolytic tank is provided on an inner side from an outer edge portion of the ion exchange membrane, the outer edge portion of the ion exchange membrane protruding to an outer side from the sealing part may be likely to be dried. When the outer edge portion of the ion exchange membrane is dried, the degradation of the ion exchange membrane is likely to be accelerated.

The present disclosure is made to solve the problem described above, and an object of the present disclosure is to provide an electrolytic cell and an electrolyzer that can suppress the degradation of an ion exchange membrane.

### Solution to Problem

To solve the above-described problem, an electrolytic cell according to the present disclosure includes: a first separator; a second separator disposed with a space between the first separator and the second separator; an ion exchange membrane disposed between the first separator and the second separator and configured to partition at least part of the space into a cathode chamber and an anode chamber; and a sealing part disposed between the first separator and the second separator, located on an outer side from an outer edge portion of the ion exchange membrane, and configured to seal the space.

An electrolyzer according to the present disclosure includes an electrolytic cell, an electrolyte supply unit configured to supply an electrolyte to the electrolytic cell and a power supply unit configured to apply a voltage to the electrolytic cell. The electrolytic cell includes: a first separator; a second separator disposed with a space between the first separator and the second separator; an ion exchange membrane disposed between the first separator and the second separator and configured to partition at least part of the space into an anode chamber and a cathode chamber; and a sealing part disposed between the first separator and the second separator, located on an outer side from an outer edge portion of the ion exchange membrane, and configured to seal the space.

### Advantageous Effects of Invention

The electrolytic cell and the electrolyzer of the present disclosure allows the degradation of the ion exchange membrane to be suppressed.

### Brief Description of Drawings

FIG. 1 is a schematic configuration diagram illustrating an overall configuration of an electrolyzer according to a first embodiment of the present disclosure.
FIG. 2 is a cross-sectional view schematically illustrating an electrolytic cell according to the first embodiment of the present disclosure.
FIG. 3 is an exploded perspective view illustrating the electrolytic cell according to the first embodiment of the present disclosure.
FIG. 4 is a cross-sectional view illustrating the electrolytic cell according to the first embodiment of the present disclosure.
FIG. 5 is a cross-sectional view of the electrolytic cell illustrated in FIG. 4 taken along the F5-F5 line.
FIG. 6 is a cross-sectional view of the electrolytic cell illustrated in FIG. 4 taken along the F6-F6 line.
FIG. 7 is a cross-sectional view illustrating an electrolytic cell according to a first modification example of the first embodiment of the present disclosure.
FIG. 8 is a cross-sectional view illustrating an electrolytic cell according to a second modification example of the first embodiment of the present disclosure.
FIG. 9 is a cross-sectional view illustrating an electrolytic cell according to a third modification example of the first embodiment of the present disclosure.
FIG. 10 is a cross-sectional view illustrating an electrolytic cell according to a fourth modification example of the first embodiment of the present disclosure.
FIG. 11 is a cross-sectional view illustrating an electrolytic cell according to a second embodiment of the present disclosure.
FIG. 12 is a cross-sectional view of the electrolytic cell illustrated in FIG. 11 taken along the F12-F12 line.
FIG. 13 is a cross-sectional view illustrating an electrolytic cell according to a third embodiment of the present disclosure.
FIG. 14 is a cross-sectional view of the electrolytic cell illustrated in FIG. 13 taken along the F14-F14 line.
FIG. 15 is a cross-sectional view illustrating an electrolytic cell according to a modification example of the third embodiment of the present disclosure.
FIG. 16A is a table showing the results of an evaluation test conducted by holding a test sample produced as Example 1 of the first embodiment in a state simulating before and after exposure to the operation environment of the electrolyzer.
FIG. 16B is a table showing the results of an evaluation test conducted by holding a test sample produced as Comparative Example 1 for evaluating Example 1 in a state simulating before and after exposure to the operation environment of the electrolyzer.
FIG. 16C is a table showing the results of an evaluation test conducted by holding a test sample produced as Comparative Example 2 for evaluating Example 1 in a state simulating before and after exposure to the operation environment of the electrolyzer.
FIG. 17A is a scatter diagram in which dimensional change rates obtained through the evaluation test conducted on the test sample of Example 1 are separately plotted before and after the exposure to the operation environment.
FIG. 17B is a scatter diagram in which dimensional change rates obtained through the evaluation test conducted on the test sample of Comparative Example 1 are separately plotted before and after the exposure to the operation environment.
FIG. 17C is a scatter diagram in which dimensional change rates obtained through the evaluation test conducted on the test sample of Comparative Example 2 are separately plotted before and after the exposure to the operation environment.

### Description of Embodiments

Electrolytic cells and electrolyzers according to embodiments of the present disclosure will be described below with reference to the accompanying drawings. In the following description, configurations having the same or similar functions are denoted with the same reference signs.

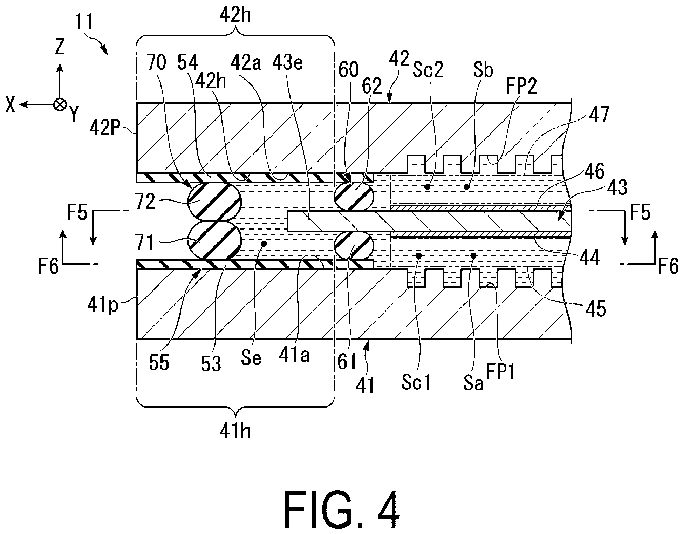

First, referring to FIG. 4, a Z direction, an X direction, and a Y direction are defined. The Z direction is a direction from a first separator 41 toward a second separator 42 to be described below. The X direction is a direction intersecting (for example, orthogonal to) the Z direction and is a direction from a central portion of an ion exchange membrane 43 to be described below toward one end portion of the ion exchange membrane 43. The Y direction is a direction intersecting (for example, orthogonal to) the Z direction and the X direction and is, for example, the depth direction in FIG. 4.

### First Embodiment

### 1. Configuration of Electrolyzer

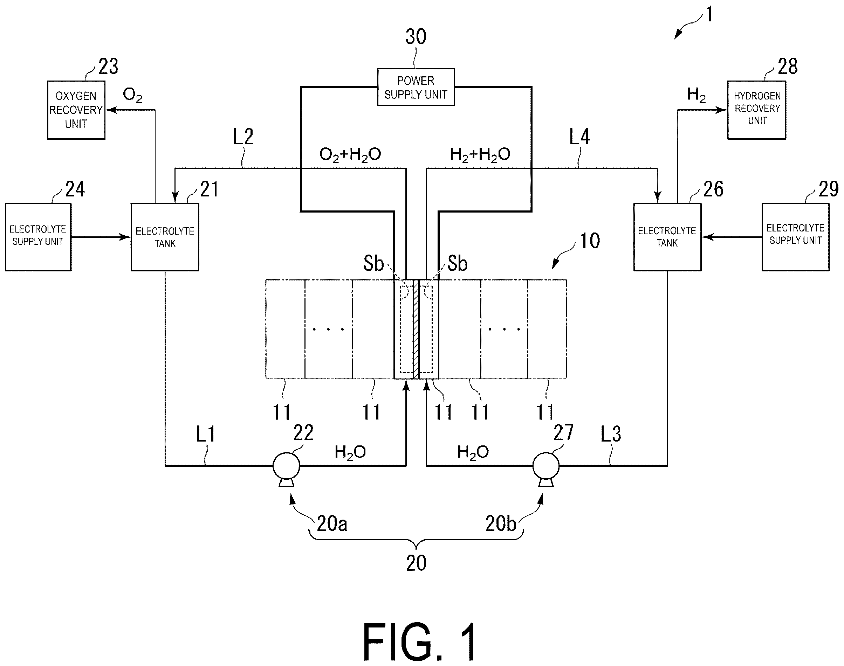

FIG. 1 is a schematic configuration diagram illustrating an overall configuration of an electrolyzer 1 according to a first embodiment of the present disclosure. The electrolyzer 1 is a device that generates hydrogen by electrolyzing water contained in an electrolyte. The electrolyzer 1 is, for example, an electrolyzer of an anion exchange membrane (AEM) type. However, the electrolyzer 1 is not limited to the above-described example and may be an electrolyzer of a different type such as a device that electrolytically reduces carbon dioxide.

The electrolyzer 1 includes, for example, an electrolytic cell stack 10, an electrolyte supply unit 20, and a power supply unit 30.

### Electrolytic Cell Stack

The electrolytic cell stack 10 is an aggregate of a plurality of electrolytic cells 11. For example, the electrolytic cell stack 10 is formed by arranging the plurality of electrolytic cells 11 in one direction. Each electrolytic cell 11 includes an anode chamber Sa and a cathode chamber Sb. The electrolytic cell 11 will be described in detail below.

### Electrolyte Supply Unit

The electrolyte supply unit 20 is a supply unit that supplies electrolyte to each electrolytic cell 11. The electrolyte is, for example, an alkaline aqueous solution. The electrolyte supply unit 20 includes an anode-side supply unit 20a and a cathode-side supply unit 20b.

The anode-side supply unit 20a is a supply unit that supplies the electrolyte to the anode chamber Sa of each electrolytic cell 11. The anode-side supply unit 20a includes, for example, a first electrolyte tank 21, a first pump 22, an oxygen recovery unit 23, a first electrolyte supply unit 24, and pipelines L1 and L2.

The first electrolyte tank 21 stores the electrolyte. A supply port of the first electrolyte tank 21 is connected to the anode chamber Sa of the electrolytic cell 11 via the pipeline L1. The first pump 22 is provided at the middle of the pipeline L1 and feeds the electrolyte stored in the first electrolyte tank 21 to the anode chamber Sa of the electrolytic cell 11.

A return port of the first electrolyte tank 21 is connected to the anode chamber Sa of the electrolytic cell 11 via the pipeline L2. The electrolyte containing oxygen generated in the electrolytic cell 11 flows into the first electrolyte tank 21 from the electrolytic cell 11. The first electrolyte tank 21 includes a gas-liquid separator that separates the oxygen contained in the electrolyte. The oxygen separated from the electrolyte by the first electrolyte tank 21 is recovered by the oxygen recovery unit 23. The first electrolyte tank 21 is replenished with the electrolyte from the first electrolyte supply unit 24.

On the other hand, the cathode-side supply unit 20b is a supply unit that supplies the electrolyte to the cathode chamber Sb of each electrolytic cell 11. The cathode-side supply unit 20b includes, for example, a second electrolyte tank 26, a second pump 27, a hydrogen recovery unit 28, a second electrolyte supply unit 29, and pipelines L3 and L4.

The second electrolyte tank 26 stores the electrolyte. A supply port of the second electrolyte tank 26 is connected to the cathode chamber Sb of the electrolytic cell 11 via the pipeline L3. The second pump 27 is provided at the middle of the pipeline L3 and feeds the electrolyte stored in the second electrolyte tank 26 to the cathode chamber Sb of the electrolytic cell 11.

A return port of the second electrolyte tank 26 is connected to the cathode chamber Sb of the electrolytic cell 11 via the pipeline L4. The electrolyte containing hydrogen generated in the electrolytic cell 11 flows into the second electrolyte tank 26 from the electrolytic cell 11. The second electrolyte tank 26 includes a gas-liquid separator that separates the hydrogen contained in the electrolyte. The hydrogen separated from the electrolyte by the second electrolyte tank 26 is recovered by the hydrogen recovery part 28. The second electrolyte tank 26 is replenished with the electrolyte from the second electrolyte supply unit 29.

### Power Supply Unit

The power supply unit 30 is a DC power supply apparatus that applies a voltage to the electrolytic cell 11. The power supply unit 30 applies a DC voltage required for electrolyzing the electrolyte between an anode and a cathode of the electrolytic cell 11.

### 2. Configuration of Electrolytic Cell

### 2.1 Basic Structure of Electrolytic Cell

Next, the electrolytic cell 11 will be described in detail.

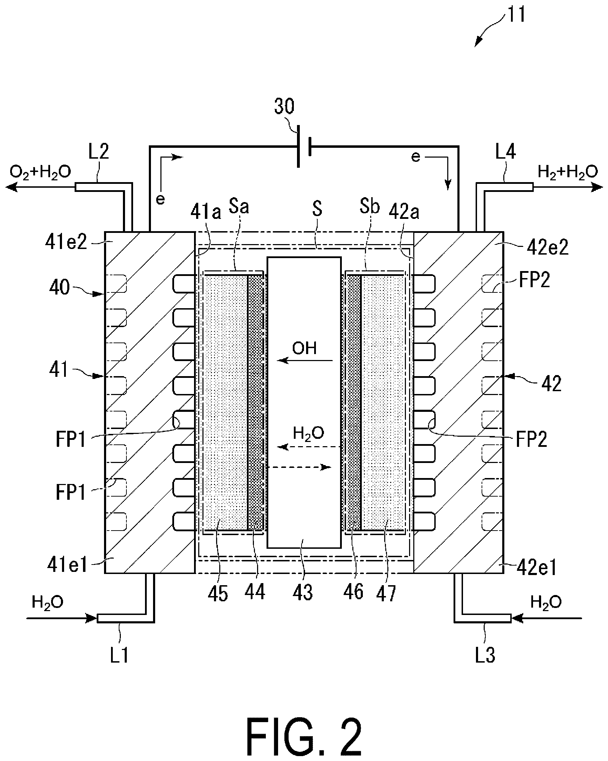

FIG. 2 is a cross-sectional view schematically illustrating the electrolytic cell 11. The electrolytic cell 11 includes, for example, the first separator 41, the second separator 42, the ion exchange membrane 43, a first catalyst layer 44, a first porous transport layer 45, a second catalyst layer 46, and a second porous transport layer 47.

### First Separator

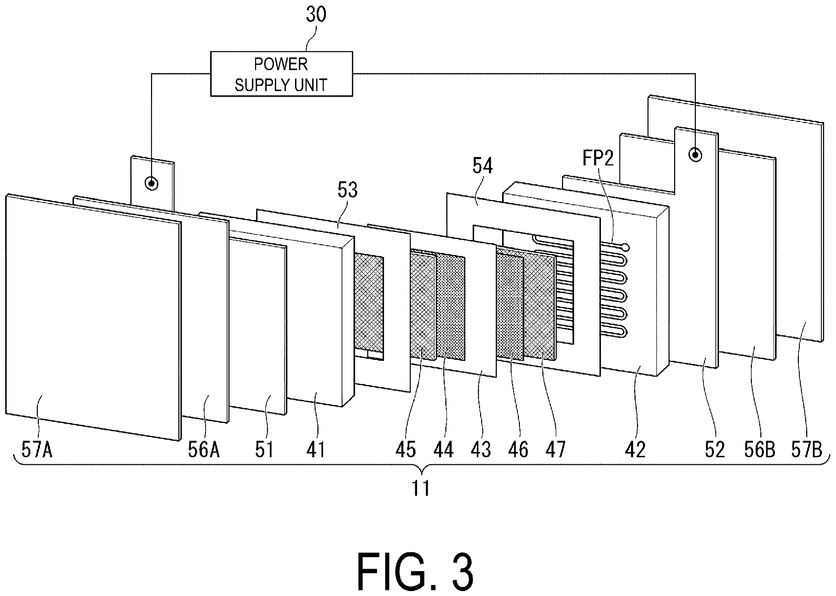

The first separator 41 is a member that defines one surface of an interior space S of the electrolytic cell 11. The interior space S is a space including the anode chamber Sa and the cathode chamber Sb to be described below. The first separator 41 has, for example, a rectangular plate shape and is formed of a metal member. A positive voltage is applied to the first separator 41 from the power supply unit 30 via a first current collector 51 (see FIG. 3) to be described below.

The first separator 41 includes a first end portion 41e1 (for example, a lower end portion) and a second end portion 41e2 (for example, an upper end portion) located opposite to the first end portion 41e1. The pipeline L1 described above is connected to the first end portion 41e1 of the first separator 41. The pipeline L2 described above is connected to the second end portion 41e2 of the first separator 41. The first separator 41 includes a first inner surface 41a facing the anode chamber Sa to be described below. The first inner surface 41a is formed with a first flow path FP1 through which the electrolyte supplied from the pipeline L1 flows. The first flow path FP1 is, for example, a groove provided at the first inner surface 41a. The electrolyte flowing through the first flow path FP1 is discharged to the outside of the electrolytic cell 11 through the pipeline L2. Each structure (for example, a flow path structure) illustrated in FIG. 2 is merely an example and does not limit the contents of the present embodiment. For example, as the flow path structure, various structures can be used according to the size, purpose, and use environment of a device. The same applies to each configuration illustrated in other drawings.

### Second Separator

The second separator 42 is a member that is disposed with the interior space S between the first separator 41 and the second separator 42 and defines another surface of the interior space S. The second separator 42 has, for example, a rectangular plate shape and is formed of a metal member. A negative voltage is applied to the second separator 42 from the power supply unit 30 via a second current collector 52 (see FIG. 3) to be described below. The first separator 41 and the second separator 42 included in the same electrolytic cell 11 form an electrolytic tank 40 of the electrolytic cell 11 as a pair of separators.

The second separator 42 includes a first end portion 42e1 (for example, a lower end portion) and a second end portion 42e2 (for example, an upper end portion) located opposite to the first end portion 42e1. The pipeline L3 described above is connected to the first end portion 42e1 of the second separator 42. The pipeline L4 described above is connected to the second end portion 42e2 of the second separator 42. The second separator 42 includes a second inner surface 42a facing the cathode chamber Sb to be described below. The second inner surface 42a is formed with a second flow path FP2 through which the electrolyte supplied from the pipeline L3 flows. The second flow path FP2 is, for example, a groove provided at the second inner surface 42a. The electrolyte flowing through the second flow path FP2 is discharged to the outside of the electrolytic cell 11 through the pipeline L4.

Here, for convenience of description, a configuration in which the first inner surface 41a of the first separator 41 includes a flow path groove and the second inner surface 42a of the second separator 42 includes a flow path groove is described. However, for example, the first separator 41 of the electrolytic cell 11 included in the electrolytic cell stack 10 (see FIG. 1) may be a bipolar plate including a similar flow path groove (indicated by a dash-double-dot line in FIG. 2) at a surface opposite to the first inner surface 41a in addition to the first inner surface 41a. The second separator 42 of the electrolytic cell 11 included in the electrolytic cell stack 10 may be a bipolar plate including a similar flow path groove (indicated by a dash-double-dot line in FIG. 2) at a surface opposite to the second inner surface 42a in addition to the second inner surface 42a. The flow path grooves provided at both surfaces of the first separator 41 may be different in shape and arrangement from each other. In addition, the flow path grooves provided at both surfaces of the second separator 42 may be different in shape and arrangement from each other.

### Ion Exchange Membrane

The ion exchange membrane 43 is a membrane that selectively allows ions to pass therethrough. The ion exchange membrane 43 is, for example, a solid polymer electrolyte membrane. The ion exchange membrane 43 is, for example, anion exchange membrane (AEM). The ion exchange membrane 43 is, for example, an anion exchange membrane having hydroxide ion conductivity. However, the ion exchange membrane 43 is not limited to the example described above and may be an ion exchange membrane of a type different from the example described above. The ion exchange membrane 43 has, for example, a rectangular sheet shape. The outer shape of the ion exchange membrane 43 is smaller than the outer shape of the first separator 41 or the second separator 42. The ion exchange membrane 43 is disposed between the first separator 41 and the second separator 42 and is located in the interior space S described above. The ion exchange membrane 43 partitions at least part of the interior space S into the anode chamber Sa and the cathode chamber Sb.

The anode chamber Sa is formed between the first inner surface 41a of the first separator 41 and the ion exchange membrane 43. In the anode chamber Sa, when a voltage is applied to the electrolytic cell 11, the following chemical reaction occurs, and oxygen is generated from the electrolyte.

2OH⁻ → 1/2O₂ + H₂O + 2e' ... (Chemical Reaction 1)

On the other hand, the cathode chamber Sb is formed between the second inner surface 42a of the second separator 42 and the ion exchange membrane 43. In the cathode chamber Sb, when a voltage is applied to the electrolytic cell 11, the following chemical reaction occurs, and hydrogen is generated from the electrolyte. It should be noted that the expression "XX is generated" in the present application may include a case where another substance is generated simultaneously with the generation of XX. A hydroxyl group generated in the cathode chamber Sb moves from the cathode chamber Sb to the anode chamber Sa through the ion exchange membrane 43.

2H₂O + 2e' → H₂ + 2OH⁻ ... (Chemical Reaction 2)

As a result, the following chemical reaction occurs in the electrolytic cell 11 in whole.

H₂O → H₂ + 1/2O₂ ... (Chemical Reaction 3)

### First Catalyst Layer

The first catalyst layer 44 is a layer that accelerates the above-described chemical reaction in the anode chamber Sa. The first catalyst layer 44 has, for example, a rectangular sheet shape. The first catalyst layer 44 is disposed in the anode chamber Sa and is adjacent to the ion exchange membrane 43. In the present application, "adjacent to" is not limited to a case where two members are independently adjacent to each other and may include a case where at least parts of two members overlap each other. For example, part of the first catalyst layer 44 and part of the ion exchange membrane 43 may overlap each other. The first catalyst layer 44 may be fixed to the ion exchange membrane 43 or may be fixed to the first porous transport layer 45 to be described below. The material of the first catalyst layer 44 may be a material that accelerates the above-described chemical reaction in the anode chamber Sa, and various known materials can be used. The first catalyst layer 44 is applied with a positive voltage from the power supply unit 30 via the first separator 41 and the first porous transport layer 45 and functions as an anode of the electrolytic cell 11.

### First Porous Transport Layer

The first porous transport layer 45 is an electrical connection part that transmits a voltage applied to the first separator 41 to the first catalyst layer 44. The first porous transport layer 45 is disposed in the anode chamber Sa. The first porous transport layer 45 is located between the first inner surface 41a of the first separator 41 and the first catalyst layer 44 and is in contact with the first inner surface 41a of the first separator 41 and the first catalyst layer 44. At least part of the first porous transport layer 45 may overlap at least part of at least one of the first separator 41 and the first catalyst layer 44. The first porous transport layer 45 is formed of, for example, a metallic mesh structural body, a sintered body, or a fiber. The first porous transport layer 45 has a structure through which the electrolyte and gas can pass.

### Second Catalyst Layer

The second catalyst layer 46 is a layer that accelerates the above-described chemical reaction in the cathode chamber Sb. The second catalyst layer 46 has, for example, a rectangular sheet shape. The second catalyst layer 46 is disposed in the cathode chamber Sb and is adjacent to the ion exchange membrane 43. For example, part of the second catalyst layer 46 and part of the ion exchange membrane 43 may overlap each other. The second catalyst layer 46 may be fixed to the ion exchange membrane 43 or may be fixed to the second porous transport layer 47 to be described below. The material of the second catalyst layer 46 may be a material that accelerates the above-described chemical reaction in the cathode chamber Sb, and various known materials can be used. The second catalyst layer 46 is applied with a negative voltage from the power supply unit 30 via the second separator 42 and the second porous transport layer 47 and functions as a cathode of the electrolytic cell 11.

### Second Porous Transport Layer

The second porous transport layer 47 is an electrical connection part that transmits a voltage applied to the second separator 42 to the second catalyst layer 46. The second porous transport layer 47 is disposed in the cathode chamber Sb. The second porous transport layer 47 is located between the second inner surface 42a of the second separator 42 and the second catalyst layer 46 and is in contact with the second inner surface 42a of the second separator 42 and the second catalyst layer 46. At least part of the second porous transport layer 47 may overlap at least part of at least one of the second separator 42 and the second catalyst layer 46. The second porous transport layer 47 is formed of, for example, a metallic mesh structural body or a sintered body. The second porous transport layer 47 has a structure through which the electrolyte and gas can pass.

FIG. 3 is an exploded perspective view illustrating the electrolytic cell 11. In addition to the above-described configuration, the electrolytic cell 11 includes, for example, the first current collector 51, the second current collector 52, a first insulator 53, a second insulator 54, a first insulating material 56A, a second insulating material 56B, a first endplate 57A, and a second endplate 57B.

### First Current Collector

The first current collector 51 is an electrical connection part that transmits a positive voltage applied from the power supply unit 30 to the first separator 41. The first current collector 51 is a metallic plate member (for example, a copper plate). The first current collector 51 is in contact with the first separator 41 from a side opposite to the interior space S of the electrolytic cell 11 and is electrically connected to the first separator 41. A positive voltage required for the electrolyzation in the electrolytic cell 11 is applied to the first current collector 51 from the power supply unit 30. The first current collector 51 may be shared by two adjacent electrolytic cells 11 in the electrolytic cell stack 10.

### Second Current Collector

The second current collector 52 is an electrical connection part that transmits a negative voltage applied from the power supply unit 30 to the second separator 42. The second current collector 52 is a metallic plate member (for example, a copper plate). The second current collector 52 is in contact with the second separator 42 from a side opposite to the interior space S of the electrolytic cell 11 and is electrically connected to the second separator 42. A negative voltage required for the electrolyzation in the electrolytic cell 11 is applied to the second current collector 52 from the power supply unit 30. The second current collector 52 may be shared by two adjacent electrolytic cells 11 in the electrolytic cell stack 10.

### First Insulator

The first insulator 53 is a member that insulates between an outer peripheral portion of the first separator 41 and an outer peripheral portion of the second separator 42. The first insulator 53 is a frame-shaped sheet member that is slightly larger than the outer shape of the first catalyst layer 44. The first insulator 53 is attached to the first inner surface 41a of the first separator 41. The material of the first insulator 53 is not particularly limited as long as it is an insulating material and is, for example, a synthetic resin such as rubber. The shape of the first insulator 53 will be described in detail below.

### Second Insulator

Similar to the first insulator 53, the second insulator 54 is a member that insulates between the outer peripheral portion of the first separator 41 and the outer peripheral portion of the second separator 42. The second insulator 54 is a frame-shaped sheet member that is slightly larger than the outer shape of the second catalyst layer 46. The second insulator 54 is attached to the second inner surface 42a of the second separator 42. The material of the second insulator 54 is not particularly limited as long as it is an insulating material and is, for example, a synthetic resin such as rubber. The shape of the second insulator 54 will be described in detail below.

### First Insulating Material

The first insulating material 56A is located between the first current collector 51 and the first endplate 57A. The first insulating material 56A has, for example, the same outer shape as the first current collector 51 or an outer shape larger than the outer shape of the first current collector 51.

### Second Insulating Material

The second insulating material 56B is located between the second current collector 52 and the second endplate 57B. The second insulating material 56B has, for example, the same outer shape as the second current collector 52 or an outer shape larger than the outer shape of the second current collector 52.

### First Endplate

The first endplate 57A is located on a side opposite to the first insulating material 56A with respect to the interior space S of the electrolytic cell 11. The first endplate 57A has, for example, an outer shape larger than the outer shape of the first insulating material 56A.

### Second Endplate

The second endplate 57B is located on a side opposite to the second insulating material 56B with respect to the interior space S of the electrolytic cell 11. The second endplate 57B has, for example, an outer shape larger than the outer shape of the second insulating material 56B.

The electrolytic cell 11 is not limited to the above-described configuration. For example, when the plurality of electrolytic cells 11 is arranged side by side in the electrolytic cell stack 10, two adjacent electrolytic cells 11 out of the plurality of electrolytic cells 11 may share the first separator 41 or the second separator 42 which is a bipolar plate. In that case, the current collector (the first current collector 51 or the second current collector 52), the insulator (the first insulator 53 or the second insulator 54), the insulating material (the first insulating material 56A or the second insulating material 56B), and the endplate (the first endplate 57A or the second endplate 57B) are not necessarily present between the two adjacent electrolytic cells 11.

### 2.2 Structure of Outer Peripheral Portion of Electrolytic Cell

Next, the structure of an outer peripheral portion of the electrolytic cell 11 will be described.

FIG. 4 is a cross-sectional view illustrating the outer peripheral portion of the electrolytic cell 11. In addition to the configuration described above, the electrolytic cell 11 includes, for example, a support part 60 and a sealing part 70.

### Support Part

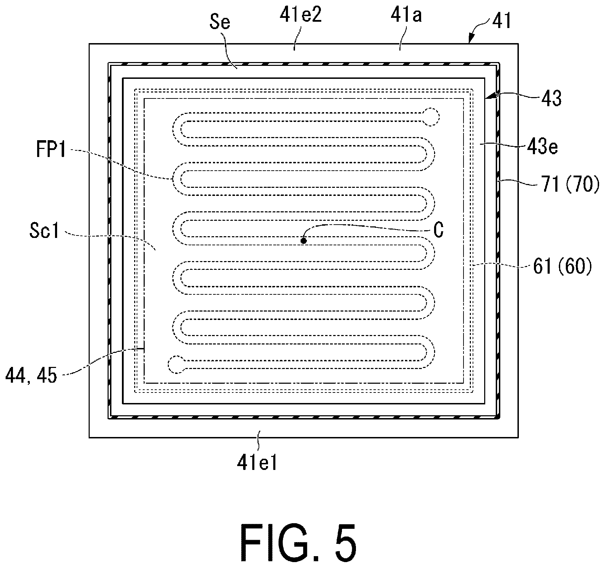

The support part 60 is a part that supports the ion exchange membrane 43 inside the electrolytic cell 11. The support part 60 is disposed between the first separator 41 and the second separator 42. The support part 60 is located on an inner side (inner peripheral side) from an outer edge portion 43e of the ion exchange membrane 43 and supports the ion exchange membrane 43. In the present disclosure, "inner side" or "inner peripheral side" means an inner side as viewed from a central portion C (see FIG. 5) of the ion exchange membrane 43 (a side close to the central portion C). In the present embodiment, the support part 60 includes a first support part 61 and a second support part 62.

### First Support Part

The first support part 61 is a support part on the anode side. The first support part 61 is disposed between the first inner surface 41a of the first separator 41 and the ion exchange membrane 43. The first support part 61 is located on an inner side from the outer edge portion 43e of the ion exchange membrane 43. The first support part 61 is sandwiched between the first inner surface 41a of the first separator 41 and the ion exchange membrane 43 and supports the ion exchange membrane 43 with respect to the first inner surface 41a of the first separator 41.

FIG. 5 is a cross-sectional view of the electrolytic cell 11 illustrated in FIG. 4 taken along the F5-F5 line. The first support part 61 is formed in an annular shape (for example, a frame shape) along the outer edge portion 43e of the ion exchange membrane 43 and the annular shape is slightly smaller than the outer edge portion 43e of the ion exchange membrane 43. The first support part 61 extends along the outer edge portion 43e of the ion exchange membrane 43 over the entire circumference of the ion exchange membrane 43. The first support part 61 supports the ion exchange membrane 43 over the entire circumference of the ion exchange membrane 43.

From another viewpoint, the first support part 61 has a frame shape that is slightly larger than a region of the first inner surface 41a of the first separator 41 in which the first flow path FP1 is provided and is slightly larger than the first porous transport layer 45. In other words, the first porous transport layer 45 is disposed on an inner side (inner peripheral side) of the first support part 61.

Returning to FIG. 4, the description of the first support part 61 will be continued. In the present embodiment, the first support part 61 has elasticity and is compressed between the first inner surface 41a of the first separator 41 and the ion exchange membrane 43. By being compressed, the first support part 61 applies a pressing force to the ion exchange membrane 43. Accordingly, the ion exchange membrane 43 is more firmly supported. For example, the elastic modulus of the first support part 61 is higher than the elastic modulus of a first sealing part 71 to be described below. When the elastic modulus of the first support part 61 is relatively high, damage to the ion exchange membrane 43 is suppressed. The material of the first support part 61 is, for example, rubber, but is not particularly limited thereto. For example, the first support part 61 formed of a material having excellent chemical resistance is suitable in a case where a potassium hydroxide electrolyte (KOH electrolyte) or the like is used as the electrolyte. In the present embodiment, the first support part 61 may have airtightness or liquid tightness and may function as a sealing part that seals between the first inner surface 41a of the first separator 41 and the ion exchange membrane 43.

### Second Support Part

The second support part 62 is a support part on the cathode side. The second support part 62 is disposed between the second inner surface 42a of the second separator 42 and the ion exchange membrane 43. The second support part 62 is located on an inner side from the outer edge portion 43e of the ion exchange membrane 43. The second support part 62 is sandwiched between the second inner surface 42a of the second separator 42 and the ion exchange membrane 43 and supports the ion exchange membrane 43 with respect to the second inner surface 42a of the second separator 42.

The shape of the second support part 62 is the same as the shape of the first support part 61. That is, the second support part 62 is formed in an annular shape (for example, a frame shape) along the outer edge portion 43e of the ion exchange membrane 43 and the annular shape is slightly smaller than the outer edge portion 43e of the ion exchange membrane 43. The second support part 62 extends along the outer edge portion 43e of the ion exchange membrane 43 over the entire circumference of the ion exchange membrane 43. The second support part 62 supports the ion exchange membrane 43 over the entire circumference of the ion exchange membrane 43.

From another viewpoint, the second support part 62 has a frame shape that is slightly larger than a region of the second inner surface 42a of the second separator 42 in which the second flow path FP2 is provided and is slightly larger than the second porous transport layer 47. In other words, the second porous transport layer 47 is disposed on an inner side (inner peripheral side) of the second support part 62.

In the present embodiment, the second support part 62 has elasticity and is compressed between the second inner surface 42a of the second separator 42 and the ion exchange membrane 43. By being compressed, the second support part 62 applies a pressing force to the ion exchange membrane 43. Accordingly, the ion exchange membrane 43 is more firmly supported. For example, the elastic modulus of the second support part 62 is higher than the elastic modulus of a second sealing part 72 to be described below. When the elastic modulus of the second support part 62 is relatively high, damage to the ion exchange membrane 43 is suppressed. The material of the second support part 62 is, for example, rubber, but is not particularly limited thereto. For example, the second support part 62 formed of a material having excellent chemical resistance is suitable in a case where a potassium hydroxide electrolyte or the like is used as the electrolyte. In the present embodiment, the second support part 62 may have airtightness or liquid tightness and may function as a sealing part that seals between the second inner surface 42a of the second separator 42 and the ion exchange membrane 43.

In the present embodiment, the support part 60 is a separate body from the sealing part 70 to be described below and is disposed separately from the sealing part 70. In the present embodiment, a space Se (hereinafter referred to as an "end portion space Se") which is part of the interior space S is present between the support part 60 and the sealing part 70. The end portion space Se is a space in which the outer edge portion 43e of the ion exchange membrane 43 is located and the electrolyte can be contained. The end portion space Se is a space sealed against the outside by the sealing part 70 to be described below.

On the other hand, a space Sc1 (hereinafter referred to as a "first central space Sc1") is formed on an inner side from the first support part 61 in the interior space S of the electrolytic cell 11. The first central space Sc1 is part of the anode chamber Sa and accommodates the first catalyst layer 44 and the first porous transport layer 45.

Similarly, a space Sc2 (hereinafter referred to as a "second central space Sc2") is formed on an inner side from the second support part 62 in the interior space S of the electrolytic cell 11. The second central space Sc2 is part of the cathode chamber Sb and accommodates the second catalyst layer 46 and the second porous transport layer 47.

### Sealing Part

The sealing part 70 is a part that seals the interior space S of the electrolytic cell 11. The sealing part 70 is disposed between the first separator 41 and the second separator 42. The sealing part 70 is located on an outer side (outer peripheral side) from the outer edge portion 43e of the ion exchange membrane 43 and seals the interior space S of the electrolytic cell 11. In the present disclosure, "outer side" or "outer peripheral side" means an outer side as viewed from the central portion C (see FIG. 5) of the ion exchange membrane 43 (a side far from the central portion C). In the present embodiment, the sealing part 70 includes the first sealing part 71 and the second sealing part 72. However, the first sealing part 71 and the second sealing part 72 may be integrally formed. That is, the first sealing part 71 and the second sealing part 72 may be a single member.

### First Sealing Part

The first sealing part 71 is a sealing part on the anode side. The first sealing part 71 is disposed between the first inner surface 41a of the first separator 41 and the second inner surface 42a of the second separator 42. The first sealing part 71 is located on an outer side from the outer edge portion 43e of the ion exchange membrane 43. The first sealing part 71 is sandwiched between the first inner surface 41a of the first separator 41 and the second sealing part 72 and seals part of an outer peripheral side of the end portion space Se.

As illustrated in FIG. 5, the first sealing part 71 is formed in an annular shape (for example, a frame shape) along the outer edge portion 43e of the ion exchange membrane 43 and the annular shape is slightly larger than the outer edge portion 43e of the ion exchange membrane 43. The first sealing part 71 extends along the outer edge portion 43e of the ion exchange membrane 43 over the entire circumference of the ion exchange membrane 43. The first sealing part 71 seals the outer peripheral side of the end portion space Se over the entire circumference of the ion exchange membrane 43.

Returning to FIG. 4, the description of the first sealing part 71 will be continued. In the present embodiment, the first sealing part 71 has elasticity and is compressed between the first inner surface 41a of the first separator 41 and the second sealing part 72. By being compressed, the first sealing part 71 more firmly seals between the first separator 41 and the second separator 42. The material of the first sealing part 71 is, for example, rubber, but is not particularly limited thereto.

### Second Sealing Part

The second sealing part 72 is a sealing part on the cathode side. The second sealing part 72 is disposed between the first inner surface 41a of the first separator 41 and the second inner surface 42a of the second separator 42. The second sealing part 72 is located on an outer side from the outer edge portion 43e of the ion exchange membrane 43. The second sealing part 72 is sandwiched between the second inner surface 42a of the second separator 42 and the first sealing part 71 and seals part of the outer peripheral side of the end portion space Se.

The shape of the second sealing part 72 is the same as the shape of the first sealing part 71. That is, the second sealing part 72 is formed in an annular shape (for example, a frame shape) along the outer edge portion 43e of the ion exchange membrane 43 and the annular shape is slightly larger than the outer edge portion 43e of the ion exchange membrane 43. The second sealing part 72 extends along the outer edge portion 43e of the ion exchange membrane 43 over the entire circumference of the ion exchange membrane 43. The second sealing part 72 seals the outer peripheral side of the end portion space Se over the entire circumference of the ion exchange membrane 43.

In the present embodiment, the second sealing part 72 has elasticity and is compressed between the second inner surface 42a of the second separator 42 and the first sealing part 71. By being compressed, the second sealing part 72 more firmly seals between the first separator 41 and the second separator 42. The material of the second sealing part 72 is, for example, rubber, but is not particularly limited thereto.

For example, the sealing part 70 is formed of a material having higher resistance to both air and the electrolyte than the support part 60. For example, the sealing part 70 is formed of a material having higher heat resistance than the support part 60.

### First Insulator

The first inner surface 41a of the first separator 41 includes an end portion region 41h located on an outer side from the first support part 61. The first insulator 53 is attached to the first inner surface 41a of the first separator 41 and covers the end portion region 41h of the first inner surface 41a. In the present embodiment, the first insulator 53 is provided over a position overlapping the first support part 61 in the Z direction and an outer peripheral edge 41p of the first separator 41.

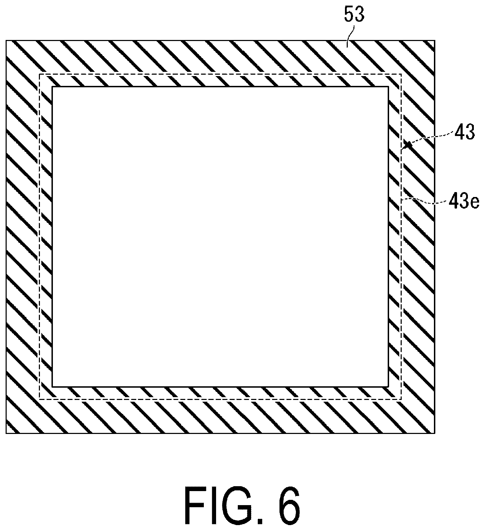

FIG. 6 is a cross-sectional view of the electrolytic cell 11 illustrated in FIG. 4 taken along the F6-F6 line. In the present embodiment, the first insulator 53 includes a portion located on an inner side from the outer edge portion 43e of the ion exchange membrane 43 in addition to a portion located on an outer side from the outer edge portion 43e of the ion exchange membrane 43. The first insulator 53 includes at least a portion located on an outer side from the outer edge portion 43e of the ion exchange membrane 43. That is, the first insulator 53 may be provided only in a region not overlapping the ion exchange membrane 43 in the Z direction.

### Second Insulator

Returning to FIG. 4, the second insulator 54 will be described. The second inner surface 42a of the second separator 42 includes an end portion region 42h located on an outer side from the second support part 62. The second insulator 54 is attached to the second inner surface 42a of the second separator 42 and covers the end portion region 42h of the second inner surface 42a. In the present embodiment, the second insulator 54 is provided over a position overlapping the second support part 62 in the Z direction and an outer peripheral edge 42p of the second separator 42.

In the present embodiment, the second insulator 54 includes a portion located on an inner side from the outer edge portion 43e of the ion exchange membrane 43 in addition to a portion located on an outer side from the outer edge portion 43e of the ion exchange membrane 43. That the second insulator 54 includes at least a portion located on an outer side from the outer edge portion 43e of the ion exchange membrane 43. That is, the second insulator 54 may be provided only in a region not overlapping the ion exchange membrane 43 in the Z direction.

In the present embodiment, the first insulator 53 and the second insulator 54 form an insulating part 55 that insulates between the outer peripheral portion of the first separator 41 and the outer peripheral portion of the second separator 42. However, one of the first insulator 53 and the second insulator 54 may be omitted.

### 3. Operational Effects

As a comparative example, an electrolytic cell in which an ion exchange membrane is provided between a pair of separators and a sealing part for sealing an interior space of an electrolytic tank is provided on an inner side from an outer edge portion of the ion exchange membrane will be considered. In such an electrolytic cell, there is a possibility that the degradation of the ion exchange membrane is likely to progress in two degradation modes described below.

As a first degradation mode, there may be a case where a dry state and a wet state are repeated at or near the outer edge portion of the ion exchange membrane depending on outside temperature, humidity, or water vapor amount. When the dry state and the wet state of the ion exchange membrane are repeated, the ion exchange membrane expands and contracts due to a difference in water content. At this time, a stress is repeatedly applied to the ion exchange membrane which is pressed by a sealing material, a packing, or the like, and the degradation is accelerated. In this case, as the degradation progresses, the water permeability or the gas permeability of the ion exchange membrane increases or cracks occur, which causes leakage of water and gas.

As a second degradation mode, when the temperature outside the electrolytic cell is high or the vapor amount outside the electrolytic cell is small, a completely dried state may be produced in which the outer edge portion of the ion exchange membrane or a portion near the outer edge portion is completely dried. When at least part of the ion exchange membrane is brought into a swollen state and then into a completely dried state, the ion exchange membrane becomes brittle, and voids or cracks occur inside the ion exchange membrane. In this case, as the degradation progresses, the water permeability or the gas permeability of the ion exchange membrane increases, which causes leakage of water and gas.

Therefore, in the present embodiment, the electrolytic cell 11 includes the support part 60 that is located on an inner side from the outer edge portion 43e of the ion exchange membrane 43 and supports the ion exchange membrane 43, and the sealing part 70 that is located on an outer side from the outer edge portion 43e of the ion exchange membrane 43 and seals the interior space S. Such a configuration allows the sealing part 70 to be disposed on an outer side from the outer edge portion 43e of the ion exchange membrane 43, allowing for suppressing drying of the outer edge portion 43e of the ion exchange membrane 43 due to exposure to the outside air. This can suppress a repetition of a dry state and a wet state or a completely dried state of the outer edge portion 43e of the ion exchange membrane 43 and a portion near the outer edge portion 43e. This can suppress degradation of the ion exchange membrane 43.

In the present embodiment, the support part 60 and the sealing part 70 are disposed separately from each other, and the outer edge portion 43e of the ion exchange membrane 43 is located between the support part 60 and the sealing part 70 and the end portion space Se capable of containing the electrolyte is present between the support part 60 and the sealing part 70. Such a configuration allows the outer edge portion 43e of the ion exchange membrane 43 to be located in the end portion space Se that includes the electrolyte or gas resulting from the evaporation of the electrolyte and is humid allowing for being less likely to be dried. This can suppress degradation of the ion exchange membrane 43 at a higher level.

### 4. Modification Examples

Next, some modification examples of the first embodiment will be described. Configurations other than those described below in each modification example are the same as the configurations of the first embodiment.

### First Modification Example

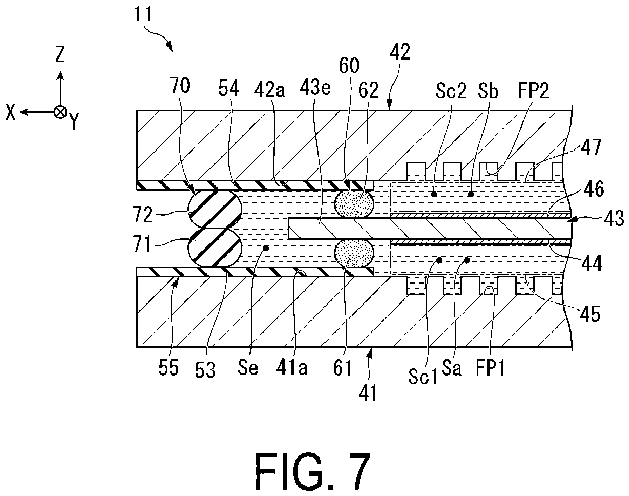

FIG. 7 is a cross-sectional view illustrating an outer peripheral portion of the electrolytic cell 11 of a first modification example. In the present modification example, at least one (for example, both) of the first support part 61 and the second support part 62 has a composition through which the electrolyte can pass. For example, the first support part 61 and the second support part 62 are formed of a porous body and include pores or voids through which the electrolyte can pass. The material of the first support part 61 and the second support part 62 is polyurethane foam, polyester, or the like, but is not particularly limited thereto. The first support part 61 allows the electrolyte supplied from the first flow path FP1 to the first central space Sc1 (the electrolyte supplied to the anode chamber Sa) to pass through toward the end portion space Se. The second support part 62 allows the electrolyte supplied from the second flow path FP2 to the second central space Sc2 (the electrolyte supplied to the cathode chamber Sb) to pass through toward the end portion space Se.

Such a configuration allows the electrolyte to be supplied to the end portion space Se, causing the end portion space Se to be more likely to become humid. Thus, the outer edge portion 43e of the ion exchange membrane 43 is less likely to be dried, and the degradation of the ion exchange membrane 43 can be suppressed at a still higher level.

### Second Modification Example

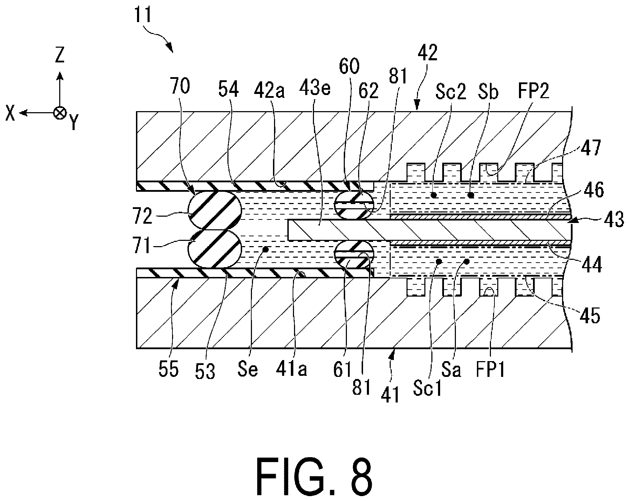

FIG. 8 is a cross-sectional view illustrating an outer peripheral portion of the electrolytic cell 11 of a second modification example. In the present modification example, at least one (for example, both) of the first support part 61 and the second support part 62 includes a through-hole 81 through which the electrolyte can pass. For example, one end of the through-hole 81 of the first support part 61 opens to the first central space Sc1. The other end of the through-hole 81 of the first support part 61 opens to the end portion space Se. The through-hole 81 of the first support part 61 causes the electrolyte supplied to the first central space Sc1 to pass through toward the end portion space Se. Similarly, one end of the through-hole 81 of the second support part 62 opens to the second central space Sc2. The other end of the through-hole 81 of the second support part 62 opens to the end portion space Se. The through-hole 81 of the second support part 62 causes the electrolyte supplied to the second central space Sc2 to pass through toward the end portion space Se.

Such a configuration allows the electrolyte to be supplied to the end portion space Se through the through-hole 81, causing the end portion space Se to be more likely to become humid. Thus, the outer edge portion 43e of the ion exchange membrane 43 is less likely to be dried, and the degradation of the ion exchange membrane 43 can be suppressed at a still higher level.

### Third Modification Example

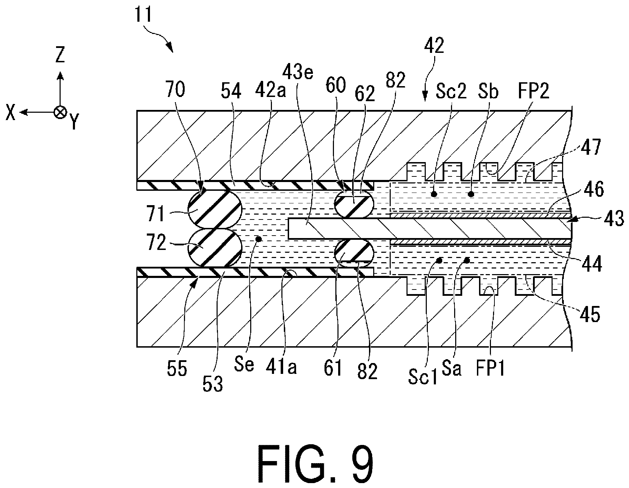

FIG. 9 is a cross-sectional view illustrating an outer peripheral portion of the electrolytic cell 11 of a third modification example. In the present modification example, at least one (for example, both) of the first support part 61 and the second support part 62 includes a groove 82 through which the electrolyte can pass. For example, one end of the groove 82 of the first support part 61 opens to the first central space Sc1. The other end of the groove 82 of the first support part 61 opens to the end portion space Se. The groove 82 of the first support part 61 causes the electrolyte supplied to the first central space Sc1 to pass through toward the end portion space Se. Similarly, one end of the groove 82 of the second support part 62 opens to the second central space Sc2. The other end of the groove 82 of the second support part 62 opens to the end portion space Se. The groove 82 of the second support part 62 causes the electrolyte supplied to the second central space Sc2 to pass through toward the end portion space Se.

Such a configuration allows the electrolyte to be supplied to the end portion space Se through the groove 82, causing the end portion space Se to be more likely to become humid. Thus, the outer edge portion 43e of the ion exchange membrane 43 is less likely to be dried, and the degradation of the ion exchange membrane 43 can be suppressed at a still higher level.

### Fourth Modification Example

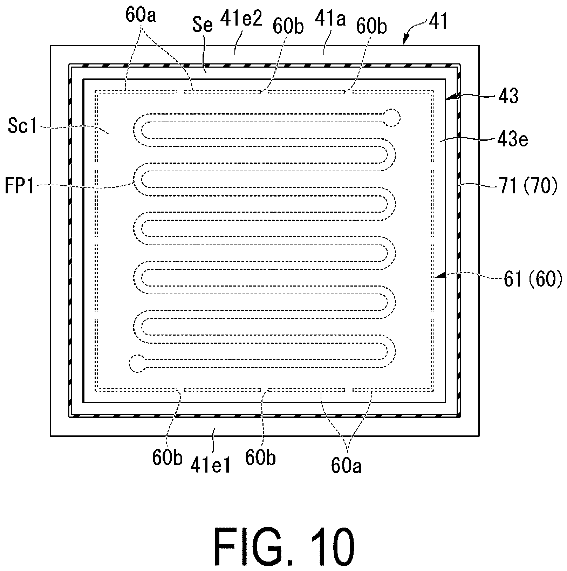

FIG. 10 is a cross-sectional view illustrating the electrolytic cell 11 of a fourth modification example. In the present modification example, at least one (for example, both) of the first support part 61 and the second support part 62 is divided into a plurality of portions 60a in an extending direction, and cut portions 60b through which the electrolyte can pass are formed between the portions 60a. The cut portions 60b of the first support part 61 cause the electrolyte supplied to the first central space Sc1 to pass through toward the end portion space Se. The cut portions 60b of the second support part 62 cause the electrolyte supplied to the second central space Sc2 to pass through toward the end portion space Se.

Such a configuration allows the electrolyte to be supplied to the end portion space Se through the cut portions 60b, causing the end portion space Se to be more likely to become humid. Thus, the outer edge portion 43e of the ion exchange membrane 43 is less likely to be dried, and the degradation of the ion exchange membrane 43 can be suppressed at a still higher level.

### Second Embodiment

Next, a second embodiment will be described. The second embodiment is different from the first embodiment in that the support part 60 and the sealing part 70 are integrally formed. Configurations other than those described below are the same as the configurations of the first embodiment.

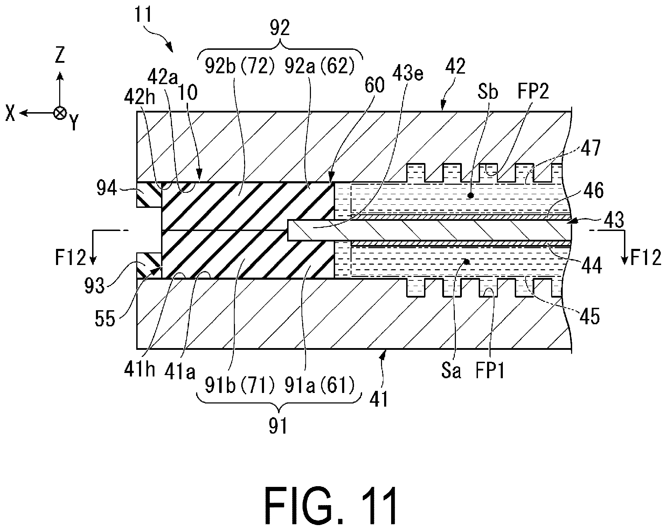

FIG. 11 is a cross-sectional view illustrating an outer peripheral portion of the electrolytic cell 11 of a second embodiment. In the present embodiment, the electrolytic cell 11 includes a first packing 91, a second packing 92, a first stopper 93, and a second stopper 94.

### First Packing

The first packing 91 is an insulating member having airtightness. The first packing 91 includes a first portion 91a and a second portion 91b.

The first portion 91a is a portion facing the ion exchange membrane 43 in the Z direction. The first portion 91a is sandwiched between the first inner surface 41a of the first separator 41 and the ion exchange membrane 43 and supports the ion exchange membrane 43 with respect to the first inner surface 41a of the first separator 41. At least part of the first portion 91a functions as the first support part 61 described above.

The second portion 91b is a portion located on an outer side from the outer edge portion 43e of the ion exchange membrane 43. The second portion 91b has a step with respect to the first portion 91a. The second portion 91b protrudes closer to the second separator 42 than the first portion 91a. Part of the second portion 91b faces the ion exchange membrane 43 in the X direction. For example, part of the second portion 91b is in contact with the ion exchange membrane 43 in the X direction. This restricts the displacement of the ion exchange membrane 43 in the X direction.

The second portion 91b is in contact with a second portion 92b of the second packing 92 to be described below in the Z direction. The second portion 91b is sandwiched between the first inner surface 41a of the first separator 41 and the second packing 92 and seals part of the outer peripheral side of the end portion space Se. The second portion 91b functions as the first sealing part 71 described above.

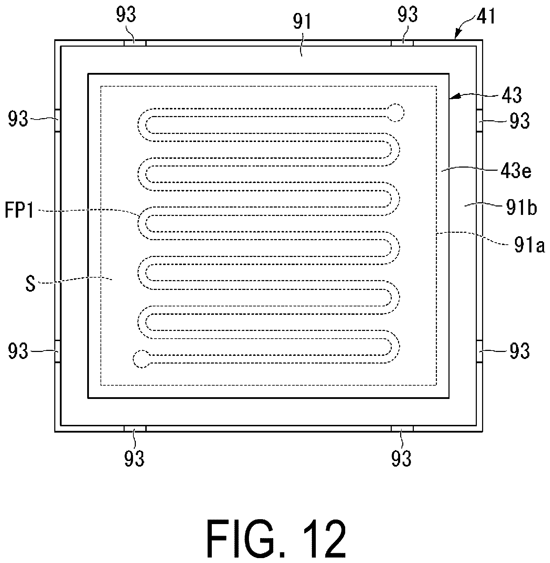

FIG. 12 is a cross-sectional view of the electrolytic cell 11 illustrated in FIG. 11 taken along the F12-F12 line. The first packing 91 has a frame shape along the outer edge portion 43e of the ion exchange membrane 43. The first packing 91 extends along the outer edge portion 43e of the ion exchange membrane 43 over the entire circumference of the ion exchange membrane 43. The first packing 91 supports the ion exchange membrane 43 over the entire circumference of the ion exchange membrane 43 and seals the outer peripheral side of the interior space S over the entire circumference of the ion exchange membrane 43.

### Second Packing

Returning to FIG. 11, the second packing 92 will be described. The second packing 92 is an insulating member having airtightness. The second packing 92 includes a first portion 92a and a second portion 92b.

The first portion 92a is a portion facing the ion exchange membrane 43 in the Z direction. The first portion 92a is sandwiched between the second inner surface 42a of the second separator 42 and the ion exchange membrane 43 and supports the ion exchange membrane 43 with respect to the second inner surface 42a of the second separator 42. At least part of the first portion 92a functions as the second support part 62 described above. In the present embodiment, the ion exchange membrane 43 is sandwiched and fixed between the first portion 91a of the first packing 91 and the first portion 92a of the second packing 92.

The second portion 92b is a portion located on an outer side from the outer edge portion 43e of the ion exchange membrane 43. The second portion 92b has a step with respect to the first portion 92a. The second portion 92b protrudes closer to the first separator 41 than the first portion 92a. Part of the second portion 92b faces the ion exchange membrane 43 in the X direction. For example, part of the second portion 92b is in contact with the ion exchange membrane 43 in the X direction. This restricts the displacement of the ion exchange membrane 43 in the X direction.

The second portion 92b is in contact with the second portion 91b of the first packing 91 in the Z direction. The second portion 92b is sandwiched between the second inner surface 42a of the second separator 42 and the first packing 91 and seals part of the outer peripheral side of the end portion space Se. The second portion 92b functions as the second sealing part 72 described above. In the present embodiment, the first packing 91 and the second packing 92 form the insulating part 55 that insulates between the outer peripheral portion of the first separator 41 and the outer peripheral portion of the second separator 42.

Similar to the first packing 91, the second packing 92 has a frame shape along the outer edge portion 43e of the ion exchange membrane 43. The second packing 92 is disposed along the outer edge portion 43e of the ion exchange membrane 43 over the entire circumference of the ion exchange membrane 43. The second packing 92 supports the ion exchange membrane 43 over the entire circumference of the ion exchange membrane 43 and seals the outer peripheral side of the interior space S over the entire circumference of the ion exchange membrane 43.

### First Stopper

The first stopper 93 is a fixing part that fixes the first packing 91 such that the first packing 91 does not come off to the outside. The first stopper 93 is fixed to the first separator 41. The first stopper 93 is in contact with the first packing 91 from the outside. In manufacturing the electrolytic cell 11, the first packing 91 is positioned by being brought into contact with the first stopper 93. The first stopper 93 may be omitted when the first packing 91 is prevented from coming off or is positioned by a different configuration in which the first packing 91 is fixed to the first separator 41, for example.

### Second Stopper

The second stopper 94 is a fixing part that fixes the second packing 92 such that the second packing 92 does not come off to the outside. The second stopper 94 is fixed to the second separator 42. The second stopper 94 is in contact with the second packing 92 from the outside. In manufacturing the electrolytic cell 11, the second packing 92 is positioned by being brought into contact with the second stopper 94. The second stopper 94 may be omitted when the second packing 92 is prevented from coming off or is positioned by a different configuration in which the second packing 92 is fixed to the second separator 42, for example.

Such a configuration allows for supporting the ion exchange membrane 43 and suppressing drying of the outer edge portion 43e of the ion exchange membrane 43 due to exposure to the outside air. This can suppress a repetition of a dry state and a wet state or a completely dried state of the outer edge portion 43e of the ion exchange membrane 43 and a portion near the outer edge portion 43e. This can suppress degradation of the ion exchange membrane 43.

### Third Embodiment

Next, a third embodiment will be described. The third embodiment is different from the first embodiment in that end portion flow paths FP1e and FP2e through which the electrolyte flows into the end portion space Se are provided. Configurations other than those described below are the same as the configurations of the first embodiment.

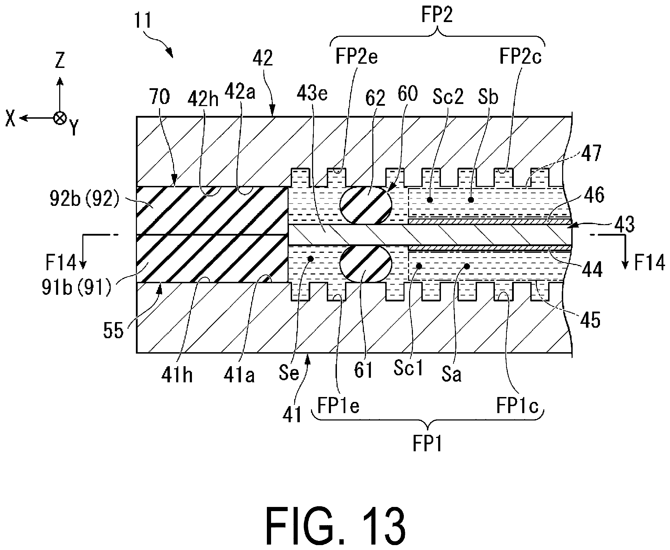

FIG. 13 is a cross-sectional view illustrating an outer peripheral portion of the electrolytic cell 11 of a third embodiment. In the present embodiment, the first packing 91 includes only the second portion 91b and does not include the first portion 91a. In addition, the second packing 92 includes only the second portion 92b and does not include the first portion 92a.

### First Flow Path

In the present embodiment, the first flow path FP1 of the first separator 41 includes a first central flow path FP1c and a first end portion flow path FP1e.

### First Central Flow Path

The first central flow path FP1e corresponds to the first flow path FP1 described in the first embodiment. That is, the first central flow path FP1c is provided on an inner side from the first support part 61 at the first inner surface 41a of the first separator 41.

### First End Portion Flow Path

The first end portion flow path FP1e is a flow path that can supply the electrolyte to the end portion space Se. The first end portion flow path FP1e is provided, for example, in the end portion region 41h of the first inner surface 41a of the first separator 41 (i.e., a region on an outer side from the first support part 61). The first end portion flow path FP1e is, for example, a groove provided at the first inner surface 41a.

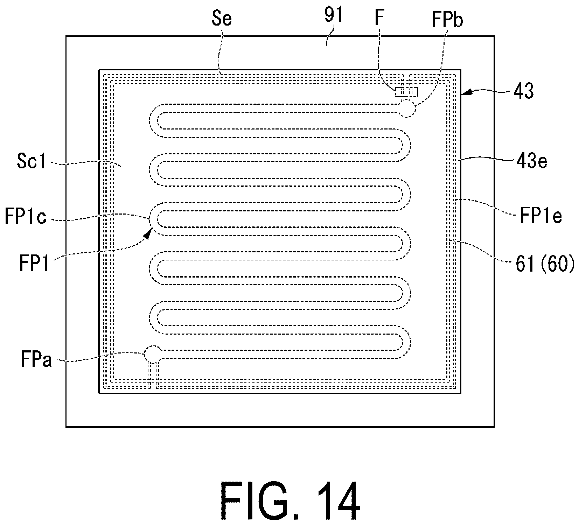

FIG. 14 is a cross-sectional view of the electrolytic cell 11 illustrated in FIG. 13 taken along the F14-F14 line. For convenience of description, FIG. 14 illustrates only one of a plurality of first end portion flow paths FP1e illustrated in FIG. 13. The first flow path FP1 includes an inflow port FPa and an outflow port FPb. The inflow port FPa communicates with the pipeline L1, and the electrolyte flows from the pipeline L1 into the inflow port FPa. The outflow port FPb communicates with the pipeline L2, and the electrolyte having passed through the electrolytic cell 11 is discharged from the outflow port FPb to the pipeline L2.

In the present embodiment, the first end portion flow path FP1e branches off from the first central flow path FP1c at the inflow port FPa. The first end portion flow path FP1e runs through the end portion region 41h of the first separator 41 and merges with the first central flow path FP1c at the outflow port FPb.

Alternatively, the first end portion flow path FP1e may be continuous with the first central flow path FP1e. That is, the electrolyte flowing in from the inflow port FPa may flow through the first end portion flow path FP1e and then flow into the first central flow path FP1c, or conversely the electrolyte flowing in from the inflow port FPa may flow through the first central flow path FP1c and then flow into the first end portion flow path FP1e.

In a configuration in which the electrolyte can flow through the first central flow path FP1c and then flow into the first end portion flow path FP1e, a filter F that allows the electrolyte to pass therethrough but suppresses gas (hydrogen or oxygen) from passing therethrough may be provided between the first central flow path FP1c and the first end portion flow path FP1e. As such a filter F, a filter having fine mesh through which gas is less likely to pass can be employed.

### Second Flow Path

Returning to FIG. 13, the second flow path FP2 will be described. In the present embodiment, the second flow path FP2 of the second separator 42 includes a second central flow path FP2c and a second end portion flow path FP2e.

### Second Central Flow Path

The second central flow path FP2c corresponds to the second flow path FP2 described in the first embodiment. That is, the second central flow path FP2c is provided on an inner side from the second support part 62 at the second inner surface 42a of the second separator 42.

### Second End Portion Flow Path

The second end portion flow path FP2e is a flow path that can supply the electrolyte to the end portion space Se. The second end portion flow path FP2e is provided, for example, in the end portion region 42h of the second inner surface 42a of the second separator 42 (i.e., a region on an outer side from the second support part 62). The second end portion flow path FP2e is, for example, a groove provided at the second inner surface 42a. Similar to the relationship between the first end portion flow path FP1e and the first central flow path FP1c, the second end portion flow path FP2e may be a flow path branched from the second central flow path FP2c or may be a flow path continuous with the second central flow path FP2c.

Such a configuration allows the electrolyte to be supplied to the end portion space Se through the end portion flow paths FP1e and FP2e, causing the end portion space Se to be more likely to become humid. Thus, the outer edge portion 43e of the ion exchange membrane 43 is less likely to be dried, and the degradation of the ion exchange membrane 43 can be suppressed at a still higher level.

In the present embodiment, the first end portion flow path FP1e branches off from the first central flow path FP1c at a position closer to the inflow port FPa than to the outflow port FPb. Such a configuration allows the gas generated by electrolyzation to be less likely to flow into the first end portion flow path FP1e. As a result, the electrolyte is easily supplied to the end portion space Se.

### Modification Example

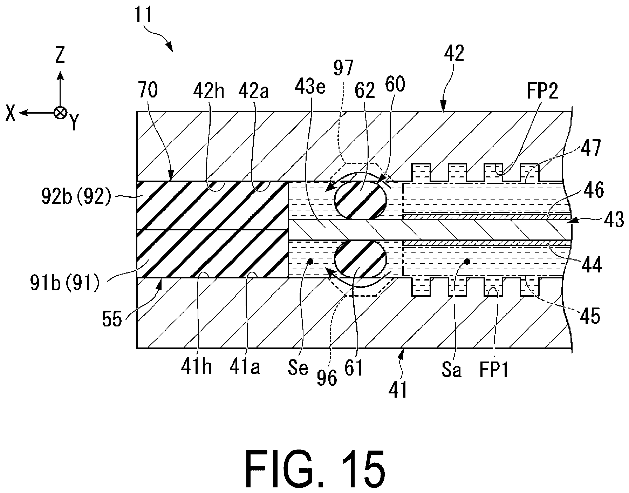

FIG. 15 is a cross-sectional view illustrating an outer peripheral portion of the electrolytic cell 11 of a modification example of the third embodiment. In the present modification example, the first inner surface 41a of the first separator 41 includes a groove 96 through which the electrolyte can pass. The groove 96 is provided straddling the first support part 61 in the X direction and causes the electrolyte supplied to the first central space Sc1 to pass through toward the end portion space Se. The groove 96 is an example of a flow path that can supply the electrolyte to the end portion space Se.

In the present modification example, the second inner surface 42a of the second separator 42 includes a groove 97 through which the electrolyte can pass. The groove 97 is provided straddling the second support part 62 in the X direction and causes the electrolyte supplied to the second central space Sc2 to pass through toward the end portion space Se. The groove 97 is an example of a flow path that can supply the electrolyte to the end portion space Se.

Such a flow path can also supply the electrolyte to the end portion space Se. That is, the flow path that can supply the electrolyte to the end portion space Se is not limited to flow paths having the same shape as the central flow paths FP1c and FP2c.

### Other Embodiments

An embodiment according to the present disclosure has been described in detail with reference to the drawings. However, the specific configuration of the present disclosure is not limited to this embodiment. Design change without departing from the main gist of the present disclosure or the like is also included. For example, the above-described embodiments may be appropriately combined and implemented. For example, a flow path similar to that of the third embodiment may be provided in the configuration of the first embodiment. For example, the stoppers 93 and 94 of the second embodiment may be provided in the configuration of the third embodiment.

As described above, the electrolytic cell 11, the electrolytic cell stack 10, and the electrolyzer 1 are not limited to devices that generate hydrogen and can be used as devices that electrolytically reduce carbon dioxide. In this case, a carbon dioxide-containing substance is supplied to the cathode chamber Sb, and a carbon dioxide reducing substance is generated in the cathode chamber Sb. The carbon dioxide reducing substance includes at least one of carbon monoxide, formic acid, formate, alcohol, or hydrocarbon. The alcohol is, for example, methanol or ethanol. The hydrocarbon is, for example, methane, ethylene, or acetylene.

### Supplementary Notes

The electrolytic cell 11 and the electrolyzer 1 according to each of the embodiments is understood as follows, for example.

(1) An electrolytic cell 11 according to a first aspect includes: a first separator 41; a second separator 42 disposed with a space (interior space S) between the first separator 41 and the second separator 42; an ion exchange membrane 43 disposed between the first separator 41 and the second separator 42 and configured to partition at least part of the space into an anode chamber Sa and a cathode chamber Sb; and a sealing part 70 disposed between the first separator 41 and the second separator 42, located on an outer side from an outer edge portion 43e of the ion exchange membrane 43, and configured to seal the space.

Such a configuration allows the sealing part 70 to be disposed on an outer side from the outer edge portion 43e of the ion exchange membrane 43, allowing for suppressing drying of the outer edge portion 43e of the ion exchange membrane 43 due to exposure to the outside air. This can suppress a repetition of a dry state and a wet state or a completely dried state of the outer edge portion 43e of the ion exchange membrane 43 and a portion near the outer edge portion 43e. This can suppress degradation of the ion exchange membrane 43.

(2) An electrolytic cell 11 according to a second aspect is the electrolytic cell 11 according to the first aspect and may further include an insulating part 55 disposed between the first separator 41 and the second separator 42 and including a portion located on an outer side from the outer edge portion 43e of the ion exchange membrane 43. Such a configuration allows for preventing a short circuit between the first separator 41 and the second separator 42 even in a portion without the ion exchange membrane 43 due to the outer shape of the ion exchange membrane 43 being smaller than the outer shape of the first separator 41 or the second separator 42.

(3) An electrolytic cell 11 according to a third aspect is the electrolytic cell 11 according to the first or second aspect and may further include a support part 60 disposed between the first separator 41 and the second separator 42, located on an inner side from the outer edge portion 43e of the ion exchange membrane 43, and configured to support the ion exchange membrane 43.

Such a configuration allows the ion exchange membrane 43 to be supported by the support part 60 at a position on an inner side from the outer edge portion 43e of the ion exchange membrane 43. This can stably support the ion exchange membrane 43 even when the outer shape of the ion exchange membrane 43 is smaller than the outer shapes of the first separator 41 and the second separator 42. Further, examples of a synergistic effect of providing the support part 60 and the sealing part 70 include an effect that safety is further enhanced by suppressing the mixing of the oxygen gas generated in the anode chamber Sa and the hydrogen gas generated in the cathode chamber Sb and/or that the mixing of the solution of the cathode chamber Sb and the solution of the anode chamber Sa can easily be suppressed when the compositions of the solutions are different between the cathode chamber Sb and the anode chamber Sa.

(4) An electrolytic cell 11 according to a fourth aspect is the electrolytic cell 11 according to the third aspect. The support part 60 and the sealing part 70 may extend along the outer edge portion 43e of the ion exchange membrane 43. Such a configuration allows for suppressing the degradation of the ion exchange membrane 43 at a wider portion of the outer edge portion 43e of the ion exchange membrane 43.

(5) An electrolytic cell 11 according to a fifth aspect is the electrolytic cell 11 according to the third or fourth aspect. The support part 60 and the sealing part 70 may be disposed separately from each other. Between the support part 60 and the sealing part 70, the outer edge portion 43e of the ion exchange membrane 43 may be located, and an end portion space Se capable of containing electrolyte may be present. Such a configuration allows the outer edge portion 43e of the ion exchange membrane 43 to be located in the end portion space Se that includes the electrolyte or gas resulting from the evaporation of the electrolyte and is humid allowing for being less likely to be dried. This can suppress degradation of the ion exchange membrane 43 at a higher level.

(6) An electrolytic cell 11 according to a sixth aspect is the electrolytic cell 11 according to the fifth aspect. The support part 60 may be formed in an annular shape along the outer edge portion 43e of the ion exchange membrane 43, and the annular shape may be smaller than the outer edge portion 43e of the ion exchange membrane 43. The sealing part 70 may be formed in an annular shape along the outer edge portion 43e of the ion exchange membrane 43, and the annular shape may be larger than the outer edge portion 43e of the ion exchange membrane 43. In the present disclosure, "annular shape" is not limited to a circular ring shape and may also include a rectangular ring shape. In the present disclosure, an "annular shape" is not limited to a continuous annular shape and may also include an annular shape including a break in the middle. Such a configuration allows the support part 60 and the sealing part 70 to form the end portion space Se having an annular shape corresponding to the entire circumference of the outer edge portion 43e of the ion exchange membrane 43. This can suppress degradation of the ion exchange membrane 43 at a higher level.

(7) An electrolytic cell 11 according to a seventh aspect is the electrolytic cell 11 according to any one of the third to sixth aspects. The support part 60 may have a composition or a structure through which electrolyte supplied to the anode chamber Sa or the cathode chamber Sb can pass toward the end portion space Se. Such a configuration allows the electrolyte supplied to the anode chamber Sa or the cathode chamber Sb to flow into the end portion space Se, allowing the end portion space Se to be filled with a larger amount of the electrolyte. This allows the outer edge portion 43e of the ion exchange membrane 43 to be further less likely to be dried. As a result, the degradation of the ion exchange membrane 43 can be suppressed at a higher level.

(8) An electrolytic cell 11 according to an eighth aspect is the electrolytic cell 11 according to any one of the third to seventh aspects. Between the support part 60 and the sealing part 70, the outer edge portion 43e of the ion exchange membrane 43 may be located, an end portion space Se capable of containing electrolyte may be present. At least one of the first separator 41 and the second separator 42 may include a flow path (end portion flow path FP1e, FP2e) capable of supplying the electrolyte to the end portion space Se. Such a configuration allows the end portion space Se to be filled with a larger amount of the electrolyte by the flow path. This allows the outer edge portion 43e of the ion exchange membrane 43 to be further less likely to be dried. As a result, the degradation of the ion exchange membrane 43 can be suppressed at a higher level.

(9) An electrolytic cell 11 according to a ninth aspect is the electrolytic cell 11 according to the third or fourth aspect. The support part 60 and the sealing part 70 may be integrally formed. Such a configuration can improve the workability in attaching the support part 60 and the sealing part 70 as compared to a case where the support part 60 and the sealing part 70 are separately provided. As a result, the productivity of the electrolytic cell 11 can be enhanced.

(10) An electrolytic cell 11 according to a tenth aspect is the electrolytic cell 11 according to the ninth aspect and may further include: a first packing 91 including part of the support part 60 and part of the sealing part 70; and a second packing 92 including another part of the support part 60 and another part of the sealing part 70 and configured to sandwich the ion exchange membrane 43 between the first packing 91 and the second packing 92. Such a configuration allows the support part 60 that supports the ion exchange membrane 43 and the sealing part 70 that seals an outer peripheral side of the ion exchange membrane 43 to be formed by sandwiching the ion exchange membrane 43 between the first packing 91 and the second packing 92. Thus, the productivity of the electrolytic cell 11 can be further enhanced.

(11) An electrolytic cell 11 according to an eleventh aspect is the electrolytic cell 11 according to any one of the first to tenth aspects. The ion exchange membrane 43 may be an anion exchange membrane having hydroxide ion conductivity.

(12) An electrolytic cell 11 according to a twelfth aspect is the electrolytic cell 11 according to the eleventh aspect. Hydrogen may be generated in the cathode chamber Sb.

(13) An electrolytic cell 11 according to a thirteenth aspect is the electrolytic cell 11 according to the eleventh aspect. A carbon dioxide-containing substance may be supplied to the cathode chamber Sb, and a carbon dioxide reducing substance may be generated in the cathode chamber Sb.

(14) An electrolytic cell 11 according to a fourteenth aspect is the electrolytic cell 11 according to the thirteenth aspect. The carbon dioxide reducing substance may be at least one of carbon monoxide, formic acid, formate, alcohol, or hydrocarbon.

(15) An electrolyzer 1 according to a fifteenth aspect includes: the electrolytic cell 11 according to any one of the first to fourteenth aspects; an electrolyte supply unit 20 configured to supply electrolyte to the electrolytic cell 11; and a power supply unit 30 configured to apply a voltage to the electrolytic cell 11. Such a configuration can suppress the degradation of the ion exchange membrane 43 for the same reason as in the electrolytic cell 11 according to the first aspect.

(16) An electrolyzer 1 according to a sixteenth aspect is the electrolyzer 1 according to the fifteenth aspect and may further include an electrolytic cell stack 10 including a plurality of electrolytic cells 11 including the electrolytic cell 11. Two adjacent electrolytic cells 11 out of the plurality of electrolytic cells 11 may share the first separator 41 or the second separator 42 as a bipolar plate. Such a configuration allows the electrolytic cell stack 10 to be easily downsized and, as a result, the electrolyzer 1 to be easily downsized.

### Examples

### Example 1

A test sample was made by employing an anion exchange membrane as the ion exchange membrane 43 of the electrolytic cell 11 and employing a rubber sheet made of ethylene propylene resin (EPDM) as the support part 60 and the sealing part 70 in the electrolyzer 1 according to the first embodiment. The test sample was held in a state simulating before and after exposure to the operation environment (environment temperature: 60°C) of the electrolyzer 1, and an evaluation test was conducted to examine dimensional changes of the ion exchange membrane 43 before and after the exposure to the operation environment. In addition, test samples of Comparative Examples 1 and 2 were made for evaluation of Example 1, and evaluation tests were conducted by holding the test samples in the same state as in Example 1. The processes of the evaluation test conducted on each of the test samples are as follows.

(1) A new and unused ion exchange membrane 43 was prepared, and the support part 60 and the sealing part 70 were attached to the ion exchange membrane 43 to obtain a test sample A. Rectangular measurement regions A-1, A-2, and A-3 having substantially the same size were set on one side surface of the ion exchange membrane 43 of the test sample A, and the lengths of the vertical sides and the lengths of the horizontal sides of the measurement regions A-1, A-2, and A-3 were measured (initial state).
(2) The test sample A in which the support part 60 and the sealing part 70 were attached to the ion exchange membrane 43 was immersed in aqueous solution and left for a while (simulating a state before the exposure to the operation environment). After a predetermined time has elapsed, the ion exchange membrane 43 was taken out from the aqueous solution, and the lengths of the vertical sides and the lengths of the horizontal sides of the measurement regions A-1, A-2, and A-3 of the ion exchange membrane 43 swollen by the aqueous solution were measured.
(3) The ion exchange membrane 43 swollen by the aqueous solution was left in a low-humidity space for a while in a state in which the support part 60 and the sealing part 70 were still attached (simulating a state after the exposure to the operation environment). After a predetermined time has elapsed, the lengths of the vertical sides and the lengths of the horizontal sides of the measurement regions A-1, A-2, and A-3 of the dried ion exchange membrane 43 were recorded.

### Comparative Example 1

As Comparative Example 1 with respect to Example 1, the following test sample was prepared, and an evaluation test similar to the evaluation test of Example 1 was conducted to examine dimensional changes of the ion exchange membrane 43 before and after the exposure to the operation environment.
(1) Separately from Example 1, a new and unused ion exchange membrane 43 was prepared, and only the support part 60 was attached to the ion exchange membrane 43 to obtain a test sample B. Rectangular measurement regions B-1, B-2, and B-3 having substantially the same size were set on one side surface of the ion exchange membrane 43 of the test sample B at the same positions as the measurement regions A-1, A-2, and A-3 set in the test sample A of Example 1, and the lengths of the vertical sides and the lengths of the horizontal sides of the measurement regions B-1, B-2, and B-3 were measured (initial state).
(2) The test sample B in which only the support part 60 was attached to the ion exchange membrane 43 was immersed in aqueous solution and left for a while (simulating a state before the exposure to the operation environment). After a predetermined time has elapsed, the ion exchange membrane 43 was taken out from the aqueous solution, and the lengths of the vertical sides and the lengths of the horizontal sides of the measurement regions B-1, B-2, and B-3 of the ion exchange membrane 43 swollen by the aqueous solution were measured.
(3) The test sample B swollen by the aqueous solution was left in a low-humidity space for a while in a state in which the support part 60 was still attached to the ion exchange membrane 43 (simulating a state after the exposure to the operation environment). After a predetermined time has elapsed, the lengths of the vertical sides and the lengths of the horizontal sides of the measurement regions B-1, B-2, and B-3 of the dried ion exchange membrane 43 were recorded.

### Comparative Example 2

Further, as Comparative Example 2 with respect to Example 1, the following test sample was prepared, and an evaluation test similar to the evaluation test of Example 1 was conducted to examine dimensional changes of the ion exchange membrane 43 before and after the exposure to the operation environment.
(1) Separately from Example 1 and Comparative Example 1, a new and unused ion exchange membrane 43 was prepared, and the ion exchange membrane 43 was regarded as a test sample C without being attached with the support part 60 and the sealing part 70. Rectangular measurement regions C-1, C-2, and C-3 having substantially the same size were set on one side surface of the ion exchange membrane 43 of the test sample C at the same positions as the measurement regions A-1, A-2, and A-3 set in the test sample A of Example 1, and the lengths of the vertical sides and the lengths of the horizontal sides of the measurement regions C-1, C-2, and C-3 were measured (initial state).
(2) The test sample C composed of only the ion exchange membrane 43 was immersed in aqueous solution and left for a while (simulating a state before the exposure to the operation environment). After a predetermined time has elapsed, the ion exchange membrane 43 was taken out from the aqueous solution, and the lengths of the vertical sides and the lengths of the horizontal sides of the measurement regions C-1, C-2, and C-3 of the ion exchange membrane 43 swollen by the aqueous solution were measured.
(3) The test sample C swollen by the aqueous solution was left in a low-humidity space for a while (simulating a state after the exposure to the operation environment). After a predetermined time has elapsed, the lengths of the vertical sides and the lengths of the horizontal sides of the measurement regions C-1, C-2, and C-3 of the dried ion exchange membrane 43 were recorded.

### (Results and Discussion)

For each of Example 1, Comparative Example 1, and Comparative Example 2, the degrees of changes in the lengths of the vertical sides of the measurement regions of the ion exchange membrane 43 before and after the exposure to the operation environment with respect to the lengths of the vertical sides of the measurement regions in the initial state of the new and unused ion exchange membrane 43 and the degrees of changes in the lengths of the horizontal sides of the measurement regions before and after the exposure to the operation environment with respect to the lengths of the horizontal sides of the measurement regions in the initial state of the new and unused ion exchange membrane 43 were evaluated in terms of dimensional change rate (%).

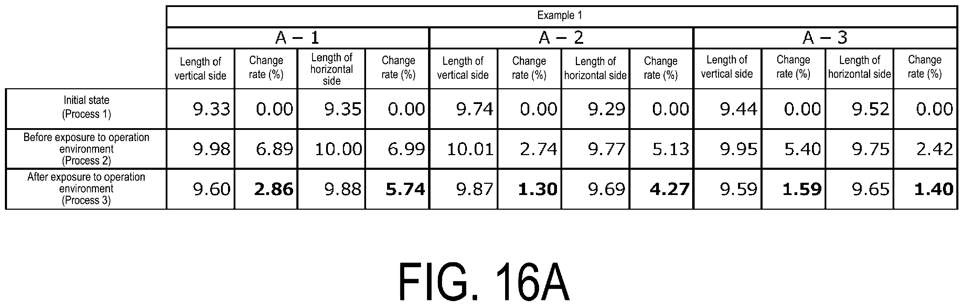

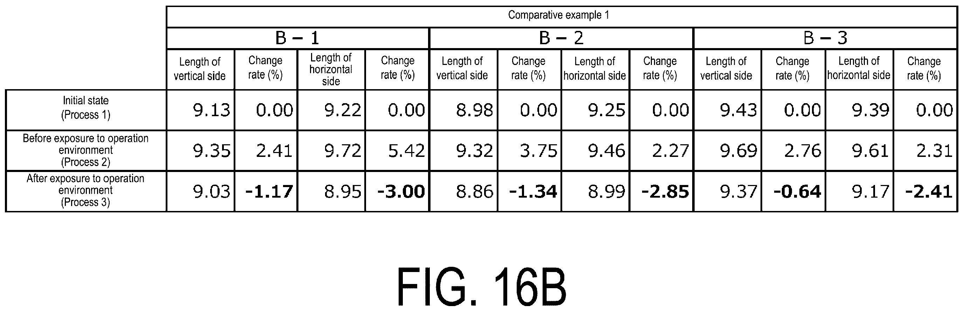

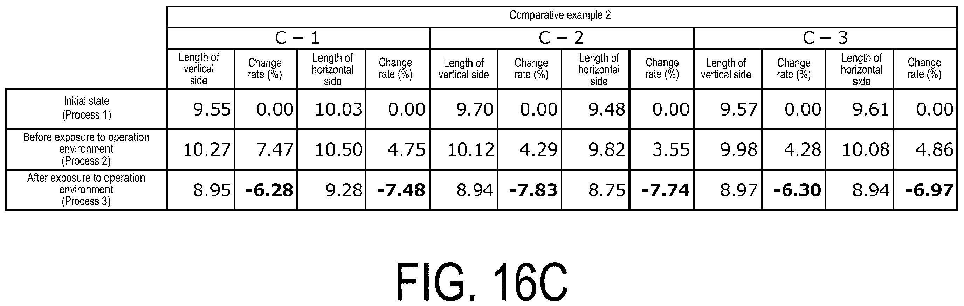

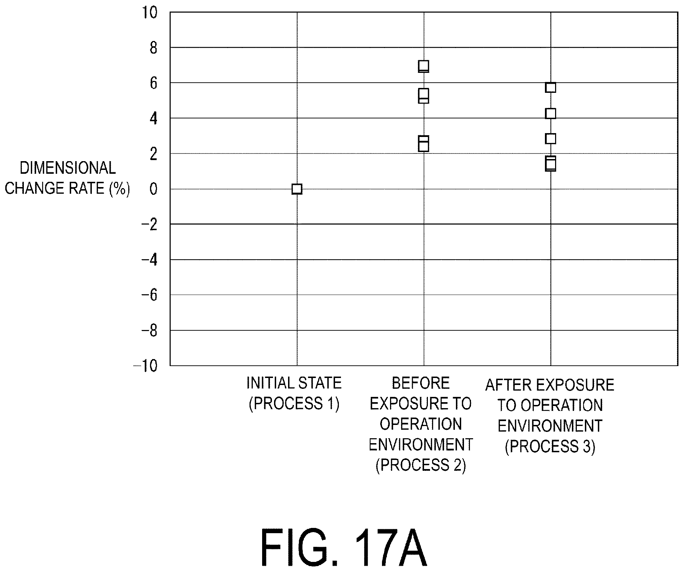

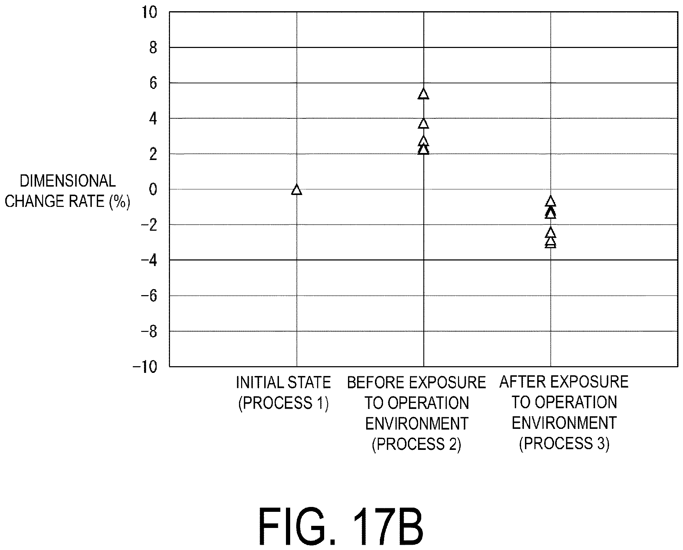

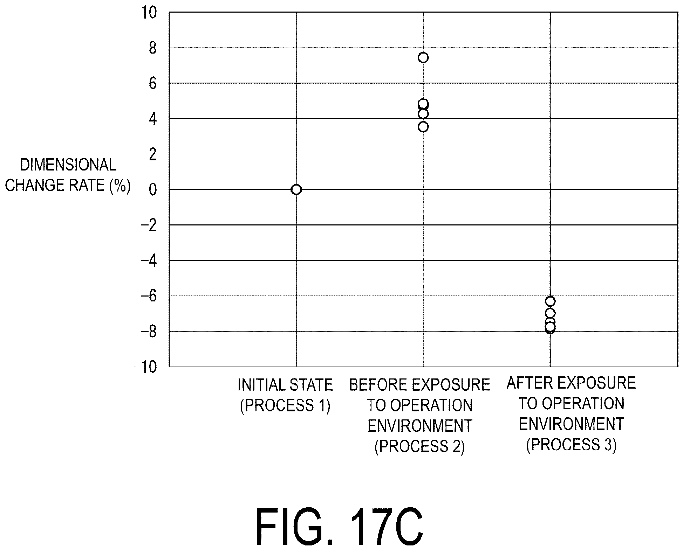

FIGS. 16A, 16B, and 16C, and FIGS. 17A, 17B, and 17C show the measured values of the dimensional change rates of the ion exchange membranes 43 before the exposure to the operation environment and after the exposure to the operation environment.

Since the ion exchange membranes 43 were swollen by the aqueous solution before the exposure to the operation environment, the dimensional change rates in the measurement regions showed positive values with respect to the initial state in all of Example 1 and Comparative Examples 1 and 2. Since the ion exchange membranes 43 were dried and contracted after the exposure to the operation environment, the dimensional change rates showed negative values and the lengths of the vertical sides and the horizontal sides of the ion exchange membranes 43 were shorter than those in the initial state in Comparative Example 1 and Comparative Example 2. However, the dimensional change rates in Example 1 were still positive values though smaller than those before the exposure to the operation environment, and it was clear that the wet state was maintained as compared with Comparative Example 1 and Comparative Example 2. That is, the electrolyzer 1 of the first embodiment can be expected to have an effect of preventing drying of the ion exchange membrane 43.

### Industrial Applicability

The present disclosure relates to an electrolytic cell and an electrolyzer. The present disclosure can suppress the degradation of an ion exchange membrane included in an electrolytic cell.

### Reference Signs List

- 1: Electrolyzer
- 10: Electrolytic cell stack
- 20: Electrolyte supply unit
- 30: Power supply unit
- 11: Electrolytic cell
- 41: First separator
- 42: Second separator
- 43: Ion exchange membrane
- 44: First catalyst layer
- 45: First porous transport layer
- 46: Second catalyst layer
- 47: Second porous transport layer
- 51: First current collector
- 52: Second current collector
- 53: First insulator
- 54: Second insulator
- 55: Insulating part
- 60: Support part
- 61: First support part
- 62: Second support part
- 70: Sealing part
- 71: First sealing part
- 72: Second sealing part
- 81: Through-hole
- 82: Groove
- 91: First packing
- 92: Second packing
- 96: Groove
- 97: Groove
- S: Interior space
- Sa: Anode chamber
- Sb: Cathode chamber
- Se: End portion space
- Sc1: First central space
- Sc2: Second central space
- FP1: First flow path
- FP1c: First central flow path
- FP1e: First end portion flow path
- FP2: Second flow path
- FP2c: Second central flow path
- FP2e: Second end portion flow path

## Claims

1. An electrolytic cell, comprising:
a first separator;
a second separator disposed with a space between the first separator and the second separator;
an ion exchange membrane disposed between the first separator and the second separator and configured to partition at least part of the space into an anode chamber and a cathode chamber; and
a sealing part disposed between the first separator and the second separator, located on an outer side from an outer edge portion of the ion exchange membrane, and configured to seal the space.

2. The electrolytic cell according to claim 1, further comprising an insulating part disposed between the first separator and the second separator and including a portion located on an outer side from the outer edge portion of the ion exchange membrane.

3. The electrolytic cell according to claim 1 or 2, further comprising a support part disposed between the first separator and the second separator, located on an inner side from the outer edge portion of the ion exchange membrane, and configured to support the ion exchange membrane.

4. The electrolytic cell according to claim 3, wherein the support part and the sealing part extend along the outer edge portion of the ion exchange membrane.

5. The electrolytic cell according to claim 3, wherein
the support part and the sealing part are disposed separately from each other, and
between the support part and the sealing part, the outer edge portion of the ion exchange membrane is located, and an end portion space capable of containing electrolyte is present.

6. The electrolytic cell according to claim 5, wherein
the support part is formed in an annular shape along the outer edge portion of the ion exchange membrane, and the annular shape is smaller than the outer edge portion of the ion exchange membrane, and
the sealing part is formed in an annular shape along the outer edge portion of the ion exchange membrane, and the annular shape is larger than the outer edge portion of the ion exchange membrane.

7. The electrolytic cell according to claim 3, wherein the support part has a composition or a structure through which electrolyte supplied to the anode chamber or the cathode chamber can pass.

8. The electrolytic cell according to claim 3, wherein
between the support part and the sealing part, the outer edge portion of the ion exchange membrane is located, and an end portion space capable of containing electrolyte is present, and
at least one of the first separator and the second separator includes a flow path capable of supplying the electrolyte to the end portion space.

9. The electrolytic cell according to claim 3, wherein the support part and the sealing part are integrally formed.

10. The electrolytic cell according to claim 9, further comprising:
a first packing including part of the support part and part of the sealing part; and
a second packing including another part of the support part and another part of the sealing part and configured to sandwich the ion exchange membrane between the first packing and the second packing.

11. The electrolytic cell according to claim 1, wherein the ion exchange membrane is an anion exchange membrane having hydroxide ion conductivity.

12. The electrolytic cell according to claim 11, wherein hydrogen is generated in the cathode chamber.

13. The electrolytic cell according to claim 11, wherein
a carbon dioxide-containing substance is supplied to the cathode chamber, and
a carbon dioxide reducing substance is generated in the cathode chamber.

14. The electrolytic cell according to claim 13, wherein the carbon dioxide reducing substance is at least one of carbon monoxide, formic acid, formate, alcohol, or hydrocarbon.

15. An electrolyzer, comprising:
an electrolytic cell described in any one of claims 1 to 14;
an electrolyte supply unit configured to supply electrolyte to the electrolytic cell; and
a power supply unit configured to apply a voltage to the electrolytic cell.

16. The electrolyzer according to claim 15, further comprising
an electrolytic cell stack including a plurality of electrolytic cells including the electrolytic cell, wherein
two adjacent electrolytic cells out of the plurality of electrolytic cells share the first separator or the second separator as a bipolar plate.
